# EUROPEAN PATENT APPLICATION

(11) **EP 2 889 462 A1**
(43) Date of publication of application: **01.07.2015**
(21) Application number: 14199526.6
(22) Date of filing: 22.12.2014
(51) Int. Cl.: F01N 3/20, F01N 3/021, F01N 3/025, F01N 13/00

(54) **Liquid quantity detecting system for internal combustion engine**

(30) Priority: 25.12.2013 JP 2013266724
(71) Applicant: Toyota Jidosha Kabushiki Kaisha, Toyota-shi, Aichi-ken 471-8571 (JP)
(72) Inventor: Yokoi, Tatsuhisa, TOYOTA-SHI, AICHI-KEN, 471-8571 (JP)
(74) Representative: Intès, Didier Gérard André

(57) **Abstract**

An exhaust passage (26) of an engine (1) is provided with a urea addition valve (230) to which urea water for purifying exhaust gas is supplied. A control device (80) calculates, based on a residual quantity of fuel in a fuel tank that stores engine fuel, a required addition quantity as a quantity of urea water that is required for executing cooling addition to cool the urea addition valve (230). Then, the control device (80) gives a notification of the residual quantity of urea water when a residual quantity of urea water in a tank (210) that stores urea water decreases to the calculated required addition quantity.

## Description

### BACKGROUND OF THE INVENTION

### 1. Field of the Invention

The invention relates to a liquid quantity detecting system for an internal combustion engine mounted on a vehicle.

### 2. Description of Related Art

There has been known a device that supplies an addition liquid to an exhaust passage from an addition valve in order to purify exhaust gas in an internal combustion engine. In a device described in, for example, Published Japanese Translation of PCT Application No. 2007-522370, an addition liquid such as urea water or the like is injected and supplied into an exhaust passage in order to reduce and purify nitrogen oxides (NOx) in exhaust gas with the aid of a catalyst.

It should be noted herein that the purification of exhaust gas becomes difficult when the quantity of the addition liquid stored in a tank becomes small. Thus, with the device described in Published Japanese Translation of PCT Application No. 2007-522370, a residual quantity of the addition liquid in the tank is monitored, and a quantity of the addition liquid consumed from the tank to purify exhaust gas is predicted. Then, a warning is issued when the predicted quantity of the consumed addition liquid exceeds the residual quantity of the addition liquid in the tank.

By the way, the addition liquid stored in the tank may be consumed not only to purify exhaust gas but also to maintain the function of the addition valve. Incidentally, the consumption of the addition liquid for the purpose of maintaining this function may be, for example, cooling addition for cooling the addition valve, or the like.

### SUMMARY OF THE INVENTION

In this respect, the conventional device does not consider the quantity of the addition liquid consumed to maintain the function of the addition valve, in predicting the quantity of the addition liquid consumed from the tank. Therefore, in some cases, the residual quantity of the addition liquid in the tank drops below a quantity that is required for maintaining the function of the addition valve, so it may become difficult to add the addition liquid with a view to, for example, maintaining the function.

This invention provides a liquid quantity detecting system capable of favorably ensuring a quantity of an addition liquid that is required for maintaining the function of an addition valve.

A liquid quantity detecting system for an internal combustion engine according to one aspect of the invention includes an addition valve, an addition liquid tank, and a control device. The addition valve is provided in an exhaust passage of the internal combustion engine. The addition valve is configured to supply an addition liquid for exhaust gas purification. The addition liquid tank stores the addition liquid. The control device is configured to a) calculate a required addition quantity based on a residual quantity of fuel in a fuel tank that stores fuel for the internal combustion engine, the required addition quantity being a quantity of the addition liquid that is required for addition liquid injection control that is executed to maintain a function of the addition valve, and b) give a notification of a residual quantity of the addition liquid when the residual quantity of the addition liquid in the addition liquid tank decreases to the required addition quantity.

The quantity of the addition liquid that is required for functional addition for maintaining the function of the addition valve increases as the residual quantity of the fuel in the fuel tank increases, and as the distance that can be traveled by a vehicle mounted with an internal combustion engine lengthens. Thus, according to the configuration, the required addition quantity as a quantity of the addition liquid that is required for executing functional addition is calculated from the residual quantity of the fuel in the fuel tank. Then, a notification of the residual quantity of the addition liquid is given when the residual quantity of the addition liquid in the addition liquid tank that stores the addition liquid decreases to the calculated required addition quantity. Therefore, when the residual quantity of the addition liquid in the addition liquid tank becomes smaller than the quantity of the addition liquid that is required for executing functional addition, a driver of the vehicle and the like are notified of the residual quantity of the addition liquid, and can also be urged, for example, to replenish the addition liquid etc. Accordingly, the quantity of the addition liquid that is required for maintaining the function of the addition valve can be favorably ensured.

In the aforementioned liquid quantity detecting system, the required addition quantity may be a quantity of the addition liquid that is required for cooling the addition valve.

The quantity of the addition liquid that is required for cooling addition for cooling the addition valve, as a type of functional addition for maintaining the function of the addition valve, increases as the residual quantity of the fuel in the fuel tank increases, and as the distance that can be traveled by the vehicle mounted with the internal combustion engine lengthens. Thus, according to the configuration, the required addition quantity as a quantity of the addition liquid that is required for executing cooling addition is calculated from the residual quantity of the fuel in the fuel tank. Then, when the residual quantity of the addition liquid in the addition liquid tank that stores the addition liquid decreases to the calculated required addition quantity, a notification of the residual quantity of the addition liquid is given. Therefore, when the residual quantity of the addition liquid in the addition liquid tank becomes smaller than the quantity of the addition liquid that is required for executing cooling addition, the driver and the like of the vehicle are notified of the residual quantity of the addition liquid, and can be urged, for example, to replenish the addition liquid etc. Accordingly, the quantity of the addition liquid that is required for cooling the addition valve can be favorably ensured.

Besides, in the case where the exhaust passage of the internal combustion engine is provided with a filter in which a regeneration treatment for reducing the quantity of collected particulate matter by raising the temperature of exhaust gas is executed, the temperature of the addition valve becomes high during the execution of the regeneration treatment. Therefore, the aforementioned cooling addition is likely to be executed. Thus, the number of times of execution of the regeneration treatment over a distance that can be traveled by a vehicle with the residual quantity of fuel may be predicted, and the required addition quantity may be calculated based on the predicted number of times of execution of the regeneration treatment. According to the configuration, the quantity of the addition liquid that is required for cooling the addition valve can be favorably calculated.

Incidentally, when calculating the required addition quantity based on the residual quantity of the fuel in the fuel tank, it is also appropriate to calculate the required addition quantity such that the required addition quantity increases as the residual quantity of fuel increases. Besides, in the aforementioned liquid quantity detecting system, a first required addition quantity as the required addition quantity corresponding to a residual quantity of the fuel in the fuel tank that is filled with engine fuel, and a second required addition quantity as the required addition quantity corresponding to a current value of the residual quantity of fuel are calculated. Then, a first notification of the residual quantity of the addition liquid is given when the residual quantity of the addition liquid in the addition liquid tank decreases to the first required addition quantity, and a second notification of the residual quantity of the addition liquid is given when the residual quantity of the addition liquid in the addition liquid tank decreases to the second required addition quantity.

According to the configuration, the residual quantity of the fuel in the fuel tank that is filled with engine fuel, namely, the first required addition quantity corresponding to a maximum storage quantity of the fuel tank is calculated. Thus, a maximum of the quantity of the addition liquid that is required for executing functional addition or cooling addition is obtained. Then, the first notification of the residual quantity of the addition liquid is given when the residual quantity of the addition liquid in the addition liquid tank decreases to this first required addition quantity. Accordingly, this first notification makes it possible to give a tentative notification of the possibility of insufficiency in the quantity of the addition liquid that is required for functional addition or cooling addition.

Furthermore, the second required addition quantity corresponding to the current value of the residual quantity of fuel is estimated, so the residual quantity of the addition liquid that is required for executing functional addition or cooling addition is more accurately obtained. Then, the second notification of the residual quantity of the addition liquid is given when the residual quantity of the addition liquid in the addition liquid tank decreases to this second required addition quantity. Accordingly, this second notification makes it possible to give a notification of a further increase in the possibility of insufficiency in the quantity of the addition liquid that is required for functional addition or cooling addition.

### BRIEF DESCRIPTION OF THE DRAWINGS

Features, advantages, and technical and industrial significance of one exemplary embodiment of the invention will be described below with reference to the accompanying drawings, in which like numerals denote like elements, and wherein:
FIG. 1 is a schematic view showing an internal combustion engine to which a liquid quantity detecting system according to the embodiment of the invention is applied, and a peripheral configuration of the internal combustion engine, as to the embodiment of the invention;
FIG. 2 is a flowchart showing a series of processing procedures for detecting a residual quantity of urea water in the embodiment of the invention;
FIG. 3 is a flowchart showing a series of processing procedures for setting a first warning residual quantity and a second warning residual quantity in the embodiment of the invention; and
FIG. 4 is a flowchart showing a series of processing procedures for issuing a warning on the residual quantity of urea water in a modification example of the embodiment of the invention.

### DETAILED DESCRIPTION OF EMBODIMENT

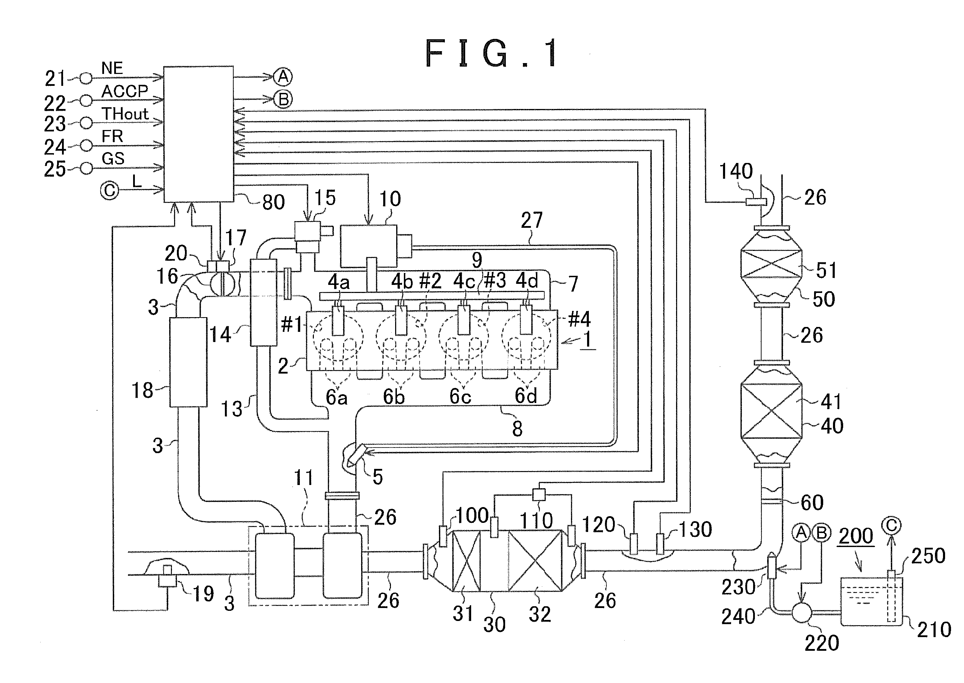

One embodiment of the invention as a concrete form of a liquid quantity detecting system in a vehicle that is equipped with an exhaust gas control apparatus that purifies exhaust gas in an internal combustion engine will be described hereinafter with reference to FIGS. 1 to 4. Incidentally, the internal combustion engine according to the present embodiment of the invention is a diesel engine, and will be referred to hereinafter simply as "an engine".

As shown in FIG. 1, an engine 1 is provided with a plurality of cylinders #1 to #4. A cylinder head 2 is mounted with a plurality of fuel injection valves 4a to 4d in such a manner as to correspond to the cylinders #1 to #4 respectively. These fuel injection valves 4a to 4d inject fuel into combustion chambers of the cylinders #1 to #4 respectively. Besides, the cylinder head 2 is provided with intake ports for introducing fresh air into the cylinders, and exhaust ports 6a to 6d for discharging combustion gas to the outside of the cylinders, in such a manner as to correspond to the cylinders #1 to #4 respectively.

The fuel injection valves 4a to 4d are connected to a common rail 9 that accumulates high-pressure fuel. The common rail 9 is connected to a supply pump 10. The supply pump 10 sucks in the fuel in a fuel tank, and supplies high-pressure fuel to the common rail 9. The high-pressure fuel supplied to the common rail 9 is injected into the cylinders from the fuel injection valves 4a to 4d respectively, when the fuel injection valves 4a to 4d are opened respectively.

An intake manifold 7 is connected to the intake ports. The intake manifold 7 is connected to an intake passage 3. An intake throttle valve 16 for adjusting the quantity of intake air is provided in this intake passage 3.

An exhaust manifold 8 is connected to the exhaust ports 6a to 6d. The exhaust manifold 8 is connected to an exhaust passage 26. The exhaust passage 26 is provided, except at both ends thereof, with a turbocharger 11 that supercharges the intake air introduced into the cylinders with the aid of an exhaust pressure. An intercooler 18 is provided in the intake passage 3 between an intake-side compressor of the turbocharger 11 and the intake throttle valve 16. This intercooler 18 is designed to cool the intake air that has risen in temperature by being supercharged by the turbocharger 11.

Besides, the exhaust passage 26 is provided, except at both the ends thereof, with a first purification member 30 that purifies exhaust gas, downstream of an exhaust-side turbine of the turbocharger 11 with respect to exhaust gas. An oxidation catalyst 31 and a filter 32 are disposed in series with the flow direction of exhaust gas, inside this first purification member 30.

A catalyst that subjects the HC in exhaust gas to an oxidation treatment is supported by the oxidation catalyst 31. Besides, the filter 32 is a member that collects the particulate matter (PM) in exhaust gas, and is constituted by a porous ceramic. A catalyst for promoting the oxidation of PM is supported by this filter 32. The PM in exhaust gas is collected when passing through a porous wall of the filter 32.

Besides, a fuel addition valve 5 for supplying fuel as an addition agent to the oxidation catalyst 31 and the filter 32 is provided in the vicinity of an aggregate portion of the exhaust manifold 8. This fuel addition valve 5 is connected to the supply pump 10 via a fuel supply pipe 27. Incidentally, the position where the fuel addition valve 5 is disposed can also be appropriately changed as long as the fuel addition valve 5 is located upstream of the first purification member 30 in an exhaust system. Besides, fuel as an addition agent may be supplied to the oxidation catalyst 31 and the filter 32 by adjusting the injection timing of fuel and carrying out post injection.

When the quantity of the PM collected by the filter 32 exceeds a predetermined value, the regeneration treatment of the filter 32 is started, and fuel is injected from the fuel addition valve 5 toward the interior of the exhaust manifold 8. Upon reaching the oxidation catalyst 31, the fuel injected from this fuel addition valve 5 is burned, so the temperature of exhaust gas is raised. Then, the exhaust gas that has been raised in temperature in the oxidation catalyst 31 flows into the filter 32, so the filter 32 is raised in temperature. Thus, the PM deposited on the filter 32 is subjected to the oxidation treatment, and decreases in quantity. As a result, the filter 32 is regenerated.

Besides, the exhaust passage 26 is provided, except at both the ends thereof, with a second purification member 40 that purifies exhaust gas, downstream of the first purification member 30 with respect to exhaust gas. A selective reduction-type NOx catalyst (hereinafter referred to as an SCR catalyst) 41 as an NOx purification catalyst that reduces and purifies the NOx in exhaust gas with the aid of a reducing agent is disposed inside the second purification member 40.

Furthermore, the exhaust passage 26 is provided, except at both the ends thereof, with a third purification member 50 that purifies exhaust gas, downstream of the second purification member 40 with respect to exhaust gas. An ammonia oxidation catalyst 51 that purifies the ammonia in exhaust gas is disposed inside the third purification member 50.

The engine 1 is provided with a urea water supply mechanism 200 that adds and supplies urea water as a reducing agent to the aforementioned SCR catalyst 41. The urea water supply mechanism 200 is constituted of a tank 210 that stores urea water as an addition liquid for purifying exhaust gas, a urea addition valve 230 that injects and adds urea water into the exhaust passage 26, a supply passage 240 that connects the urea addition valve 230 and the tank 210 to each other, a pump 220 that is provided in the supply passage 240 except at both ends thereof, and the like. Besides, the urea water supply mechanism 200 is also equipped with a level sensor 250 that detects a residual quantity of the urea water stored in the tank 210. Incidentally, the level sensor 250 is a detector that detects a residual quantity of the urea water in the tank 210 by detecting a liquid surface level of the urea water stored in the tank 210, and a sensor value of the level sensor 250 will be referred to hereinafter as a level sensor value L.

The urea addition valve 230 is provided in the exhaust passage 26 between the first purification member 30 and the second purification member 40, and an injection hole of the urea addition valve 230 is opened toward the SCR catalyst 41. The urea addition valve 230 opens upon being energized, and closes upon being stopped from being energized. When this urea addition valve 230 is opened, urea water is injected and supplied into the exhaust passage 26 via the supply passage 240.

The pump 220 is an electric pump, and delivers urea water from the tank 210 toward the urea addition valve 230 during positive rotation. On the other hand, during reverse rotation, the pump 220 delivers urea water from the urea addition valve 230 toward the tank 210. That is, during reverse rotation of the pump 220, urea water is recovered from the urea addition valve 230 and the supply passage 240, and is returned to the tank 210.

Besides, a dispersion plate 60 that disperses the urea water injected from the urea addition valve 230 to promote atomization thereof is provided in the exhaust passage 26 between the urea addition valve 230 and the SCR catalyst 41.

The urea water injected from the urea addition valve 230 is hydrolyzed by the heat of exhaust gas and turns into ammonia. This ammonia is adsorbed by the SCR catalyst 41. The adsorbed ammonia reduces and purifies NOx.

In addition, the engine 1 is equipped with an exhaust gas recirculation device (hereinafter referred to as an EGR device). This EGR device executes an exhaust gas recirculation treatment (hereinafter referred to as an EGR treatment) for introducing part of exhaust gas into intake air. Thus, the combustion temperature in the cylinders falls, and the generation quantity of NOx is reduced. This EGR device is constituted of an EGR passage 13 that establishes communication between the intake passage 3 and the exhaust manifold 8, an EGR valve 15 that is provided in the EGR passage 13, an EGR cooler 14, and the like. The opening degree of the EGR valve 15 is adjusted to regulate the recirculation quantity of the exhaust gas introduced from the exhaust passage 26 into the intake passage 3, namely, the so-called external EGR quantity. Besides, the temperature of the exhaust gas flowing in the EGR passage 13 is lowered by the EGR cooler 14.

The engine 1 is mounted with various sensors for detecting an engine operation state. For example, an airflow meter 19 detects an intake air amount GA. A throttle valve opening degree sensor 20 detects an opening degree of the intake throttle valve 16. An engine rotational speed sensor 21 detects a rotational speed of a crankshaft, namely, an engine rotational speed NE. An accelerator sensor 22 detects a depression quantity of an accelerator pedal, namely, an accelerator operation quantity ACCP. An outside air temperature sensor 23 detects an outside air temperature THout. A fuel residual quantity sensor 24 detects a residual quantity FR of fuel as a residual quantity of the engine fuel stored in the fuel tank. An acceleration sensor 25 outputs a signal corresponding to an acceleration of the vehicle and an angle of inclination of a road surface, and the acceleration of the vehicle, the state of inclination of the road surface or the like is calculated based on this signal (hereinafter referred to as an acceleration sensor value GS). Incidentally, in the present embodiment of the invention, when the vehicle accelerates or when the traveling road surface is an ascending slope, a positive value is output as the acceleration sensor value GS. On the other hand, when the vehicle decelerates or when the traveling road surface is a descending slope, a negative value is output as the acceleration sensor value GS. Then, when the vehicle travels at a constant speed or when the vehicle travels on a flat road with almost no gradient, a value close to "0" is output as the acceleration sensor value GS.

Besides, a first exhaust gas temperature sensor 100 that is provided upstream of the oxidation catalyst 31 detects a first exhaust gas temperature TH1 as a temperature of the exhaust gas that has not flowed into the oxidation catalyst 31. A differential pressure sensor 110 detects a pressure difference ΔP between an exhaust pressure upstream of the filter 32 and an exhaust pressure downstream of the filter 32.

A second exhaust gas temperature sensor 120 and a first NOx sensor 130 are provided upstream of the urea addition valve 230, in the exhaust passage 26 between the first purification member 30 and the second purification member 40. The second exhaust gas temperature sensor 120 detects a second exhaust gas temperature TH2 as a temperature of the exhaust gas that has not flowed into the SCR catalyst 41. The first NOx sensor 130 detects an amount of the NOx contained in the exhaust gas that has not flowed into the SCR catalyst 41, more specifically, a first NOx concentration N1 as a concentration (unit: ppm) of NOx.

A second NOx sensor 140 that detects a second NOx concentration N2 as a concentration of NOx in the exhaust gas that has been purified by the SCR catalyst 41 is provided in the exhaust passage 26 downstream of the third purification member 50.

Outputs of these various sensors and the like are input to a control device 80 that constitutes a control unit. This control device 80 is mainly constituted by a microcomputer that is equipped with a central processing unit (a CPU), a read only memory (a ROM) that stores various programs, maps and the like in advance, a random access memory (a RAM) that temporarily stores a calculation result of the CPU and the like, a timer counter, an input interface, an output interface and the like.

Then, this control device 80 executes various kinds of control of the engine 1, for example, fuel injection control of the fuel injection valves 4a to 4d and the fuel addition valve 5, discharge pressure control of the supply pump 10, drive quantity control of an actuator 17 that opens/closes the intake throttle valve 16, and the like.

Besides, the control device 80 also executes various kinds of exhaust gas purification control such as the aforementioned regeneration treatment for burning the PM collected by the aforementioned filter 32 and the like. The control device 80 executes addition control of urea water by the aforementioned urea addition valve 230, as a kind of exhaust gas purification control.

In this addition control, a quantity of urea that is required for subjecting the NOx discharged from the engine 1 to a reduction treatment is calculated based on an engine operation state or the like. Besides, a quantity of urea that is required for holding the quantity of the ammonia adsorbed by the SCR catalyst 41 equal to a predetermined quantity is calculated.

Then, the sum of the quantity of urea that is required for subjecting NOx to the reduction treatment and the quantity of urea that is required for maintaining the adsorption quantity of ammonia is calculated as a target addition quantity QE. The drive state of the urea addition valve 230 is controlled such that a quantity of urea water corresponding to the target addition quantity QE is injected from the urea addition valve 230.

On the other hand, when the regeneration treatment of the aforementioned filter 32 is executed and the temperature of exhaust gas becomes high, the temperature of the urea addition valve 230 that is provided in the exhaust passage 26 becomes high. When the temperature of the urea addition valve 230 thus becomes high, it may become difficult to maintain the function of the urea addition valve 230 due to the influence of heat damage. Thus, the control device 80 also executes functional addition as the addition of urea water for maintaining the function of the urea addition valve 230, separately from the addition of urea water for purifying exhaust gas.

In this functional addition, a temperature of the urea addition valve 230 is estimated based on the second exhaust gas temperature TH2 or the like. Then, when the estimated temperature exceeds a prescribed temperature, urea water is added from the urea addition valve 230. At this time, the urea water supplied to the urea addition valve 230 is stored in the tank 210, and is at a relatively low temperature. In consequence, the urea addition valve 230 is cooled through this addition of urea water, so the occurrence of heat damage is suppressed. The cooling of the urea addition valve 230 through this addition of urea water will be referred to hereinafter as "cooling addition".

In order to execute this cooling addition, the residual quantity of the urea water in the tank 210 needs to be appropriately ensured. If the residual quantity of urea water is not appropriately ensured, it is necessary to take a measure to urge a driver of the vehicle and the like to replenish urea water etc. by notifying the driver and the like of the residual quantity of urea water.

Thus, in the present embodiment of the invention, a required addition quantity as a quantity of urea water that is required for executing cooling addition is calculated based on the residual quantity of the fuel in the fuel tank. When the residual quantity of urea water decreases to the required addition quantity, a notification of the residual quantity of urea water is given, and the engine 1 is prohibited from being restarted.

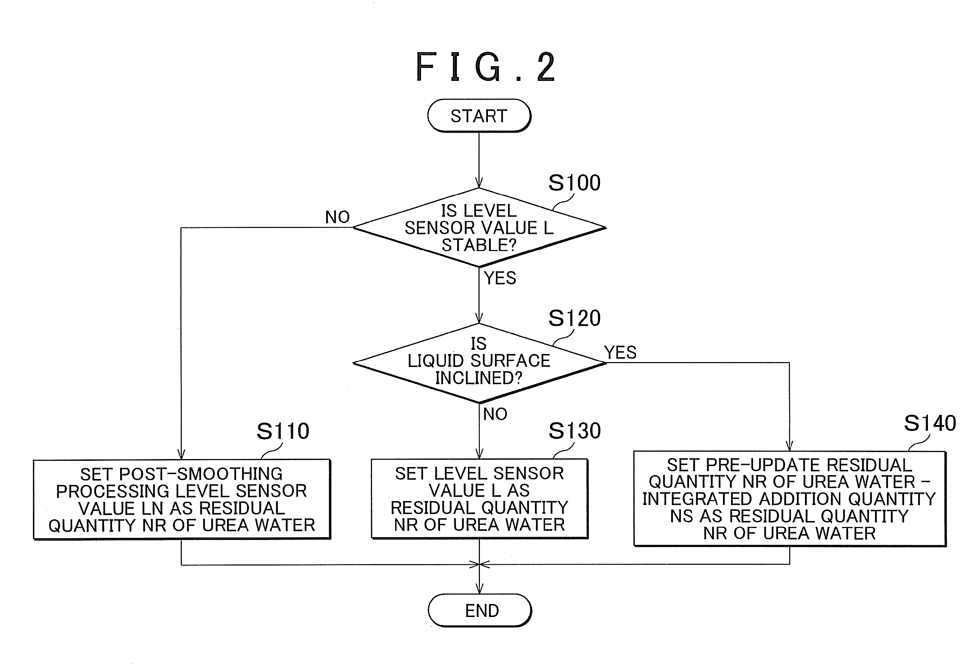

This processing will be described hereinafter with reference to FIGS. 2 to 4. Incidentally, a series of respective processes shown in FIGS. 2 to 4 are executed on a predetermined cycle by the control device 80. FIG. 2 shows a processing procedure of obtaining a residual quantity NR of the urea water in the tank 210.

When the present processing is started, it is determined whether or not the level sensor value L is stable (S100). It should be noted herein that when the fluctuation width of the level sensor value L has remained equal to or smaller than a predetermined value for a predetermined time or more, it is determined that the level sensor value L is stable. Incidentally, values that are appropriate in determining that the level sensor value L is stable are set in advance as the predetermined value and the predetermined time, respectively.

If the level sensor value L is not stable (NO in S100), a post-smoothing processing level sensor value LN that is obtained by subjecting the current level sensor value L to a smoothing processing is set as the residual quantity NR of urea water during the current execution of the processing, so the residual quantity NR of urea water is updated (S 110).

On the other hand, if the level sensor value L is stable (YES in S100), it is determined whether or not the liquid surface of the urea water stored in the tank 210 is inclined (S120). The result of the determination in this step S120 is positive when the acceleration sensor value GS is not a value close to "0", namely, when the acceleration sensor value GS indicates that the vehicle travels on a slope.

Then, if it is determined that the liquid surface is not inclined (NO in S120), the residual quantity of urea water detected based on the level sensor value L is set as the residual quantity NR of urea water during the current execution of the processing, so the residual quantity NR of urea water is updated (S130).

On the other hand, if it is determined that the liquid surface is inclined (YES in S120), the level sensor value L may be deviant from an actual residual quantity of urea water. Thus, if it is determined that the liquid surface is inclined, a value that is obtained by subtracting an integrated addition quantity NS from the residual quantity NR of the urea water that has not been updated through the current execution of the processing (i.e., the last-updated residual quantity NR of urea water) is set as the residual quantity NR of urea water during the current execution of the processing, so the residual quantity NR of urea water is updated (S140). The integrated addition quantity NS is a total quantity of the urea water added from the last update of the residual quantity NR of urea water to the current update of the residual quantity NR of urea water, and is calculated by, for example, integrating the aforementioned target addition quantity QE. Besides, in this step S140, when the residual quantity NR of urea water is updated, the integrated addition quantity NS is reset to "0", and the processing of integrating the addition quantity of urea water is resumed. Due to the process in this step S140, even if the liquid surface of urea water is inclined, the residual quantity NR of the urea water in the tank 210 is detected without being influenced by the inclination of the liquid surface.

Next, a procedure of calculating the required addition quantity as a residual quantity of urea water that is required for executing cooling addition will be described. Incidentally, the required addition quantity as a residual quantity of the addition liquid that is required for functional addition increases as the residual quantity of the fuel in the fuel tank increases, and as the distance that can be traveled by the vehicle lengthens. Accordingly, the required addition quantity is estimated to increase as the residual quantity FR of fuel increases.

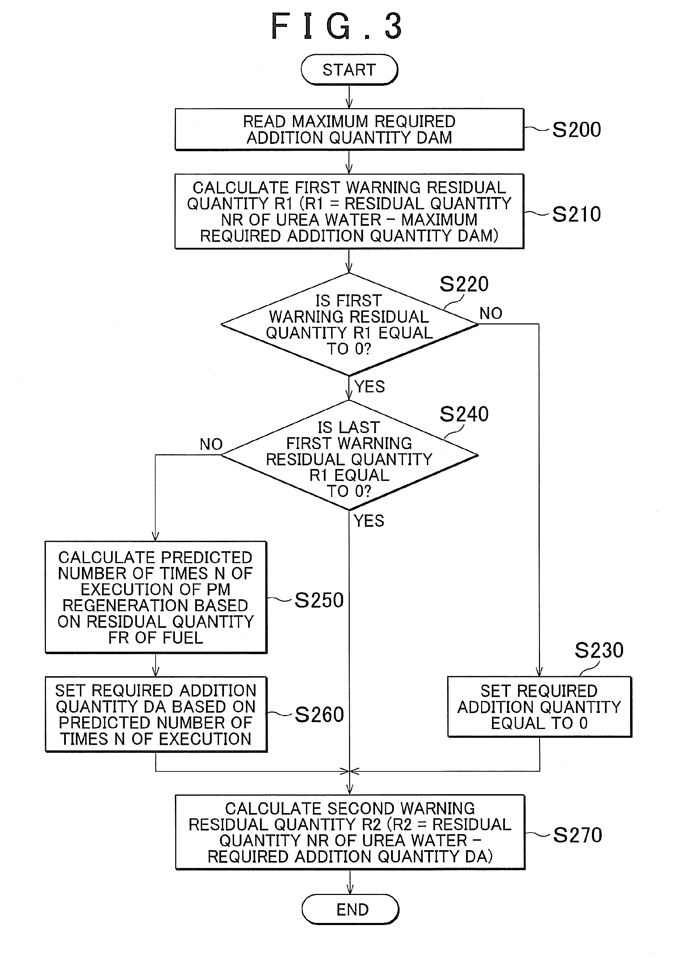

FIG. 3 shows detailed processing procedures of calculating the required addition quantity. When the present processing is started, a maximum required addition quantity DAM is read (S200). This maximum required addition quantity DAM is a value that is obtained through an experiment or the like that is conducted in advance, and is a maximum storage quantity of the fuel tank, namely, a maximum of the required addition quantity corresponding to the maximum of the residual quantity FR of fuel. More specifically, the number of times of execution of the regeneration treatment of the filter 32 over a maximum distance that can be traveled by the vehicle in a state where the fuel tank is filled with engine fuel is predicted, and the number of times of execution of cooling addition corresponding to the predicted number of times of execution of the regeneration treatment or the like is estimated. Then, a total quantity of urea water that is required for executing cooling addition the estimated number of times is set as the aforementioned maximum required addition quantity DAM. Incidentally, this maximum required addition quantity DAM is equivalent to the first required addition quantity as a required addition quantity corresponding to the residual quantity of the fuel in the fuel tank that is filled with engine fuel.

Next, a value that is obtained by subtracting the maximum required addition quantity DAM from the current residual quantity NR of urea water is calculated as a first warning residual quantity R1 (S210). Incidentally, in the case where the calculated first warning residual quantity R1 is a negative value, "0" is set as the first warning residual quantity R1, so the minimum of the first warning residual quantity R1 is limited to "0". This first warning residual quantity R1 is equivalent to a marginal quantity until a decrease in the quantity of the urea water stored in the tank 210 to the maximum required addition quantity DAM. For example, in the case where the current residual quantity NR of urea water is "5 ℓ" and the maximum required addition quantity DAM is "3 ℓ", the first warning residual quantity R1 is "2 ℓ". This implies that there is still a margin of "2 ℓ" until the quantity of the urea water stored in the tank 210 decreases to the maximum required addition quantity DAM. Besides, in the case where the calculated first warning residual quantity R1 is "0", it follows that the current residual quantity NR of urea water coincides with the maximum required addition quantity DAM, namely, that the current residual quantity NR of urea water has decreased to the maximum required addition quantity DAM. Besides, in the case where the first warning residual quantity R1 is limited to "0", the current residual quantity NR of urea water is smaller than the maximum required addition quantity DAM.

Subsequently, it is determined whether or not the first warning residual quantity R1 is "0", namely, whether or not the current residual quantity NR of urea water has decreased to the maximum required addition quantity DAM (S220). Then, if the first warning residual quantity R1 is "0" (YES in S220), it is determined whether or not the first warning residual quantity R1 during the last execution of the present processing is "0", namely, whether or not the first warning residual quantity R1 has remained equal to "0" (S240).

Then, if the first warning residual quantity R1 during the last execution of the present processing is not "0", namely, if the first warning residual quantity R1 has become equal to "0" for the first time in the current processing (NO in S240), the processes in step S250 and step S260 are executed as a process of estimating the required addition quantity DA from the current residual quantity FR of fuel.

In step S250, a predicted number of times N of execution of the aforementioned regeneration treatment is calculated based on the current residual quantity FR of fuel. More specifically, the number of times of execution of the regeneration treatment of the filter 32 over the distance that can be traveled by the vehicle with the current residual quantity FR of fuel is predicted, and the predicted number of times of execution of the regeneration treatment is set as the predicted number of times N of execution.

Subsequently in step S260, the required addition quantity DA is set based on the predicted number of times N of execution. When the regeneration treatment of the aforementioned filter 32 is executed, the temperature of the urea addition valve 230 becomes high, so the aforementioned cooling addition is likely to be executed. Thus, in step S260, the required addition quantity DA is variably set such that the required addition quantity DA increases as the predicted number of times N of execution increases. Incidentally, this required addition quantity DA is equivalent to the second required addition quantity as a required addition quantity corresponding to the current value of the residual quantity of fuel.

When the required addition quantity DA corresponding to the current residual quantity FR of fuel is thus estimated, a value that is obtained by subtracting the required addition quantity DA from the current residual quantity NR of urea water is calculated as a second warning residual quantity R2 (S270), and the present processing is temporarily ended.

In step S270, in the case where the calculated second warning residual quantity R2 is a negative value, "0" is set to the second warning residual quantity R2. Thus, the minimum of the second warning residual quantity R2 is limited to "0". This second warning residual quantity R2 is equivalent to a marginal quantity until a decrease in the quantity of the urea water stored in the tank 210 to the required addition quantity DA. For example, in the case where the current residual quantity NR of urea water is "3 ℓ" and the required addition quantity DA is "2 ℓ", the second warning residual quantity R2 is "1 ℓ". This implies that there is still a margin of "1 ℓ" until the quantity of the urea water stored in the tank 210 decreases to the required addition quantity DA. Besides, in the case where the calculated second warning residual quantity R2 is "0", it follows that the current residual quantity NR of urea water coincides with the required addition quantity DA, namely, that the current residual quantity NR of urea water has decreased to the required addition quantity DA. Besides, in the case where the second warning residual quantity R2 is limited to "0", the current residual quantity NR of urea water is smaller than the required addition quantity DA.

In the aforementioned step S220, if it is determined that the first warning residual quantity R1 is not "0" (NO in S220), the required addition quantity DA is set to "0" (S230). Then, the second warning residual quantity R2 is calculated in step S270, and the preset processing is temporarily ended. In the case where the required addition quantity is thus set to "0", the current residual quantity NR of urea water is set as the second warning residual quantity R2 in step S270.

Besides, if it is determined in the aforementioned step S240 that the first warning residual quantity R1 during the last execution of the present processing is "0", the second warning residual quantity R2 is calculated in step S270 with the currently set required addition quantity DA held unchanged, and the present processing is temporarily ended.

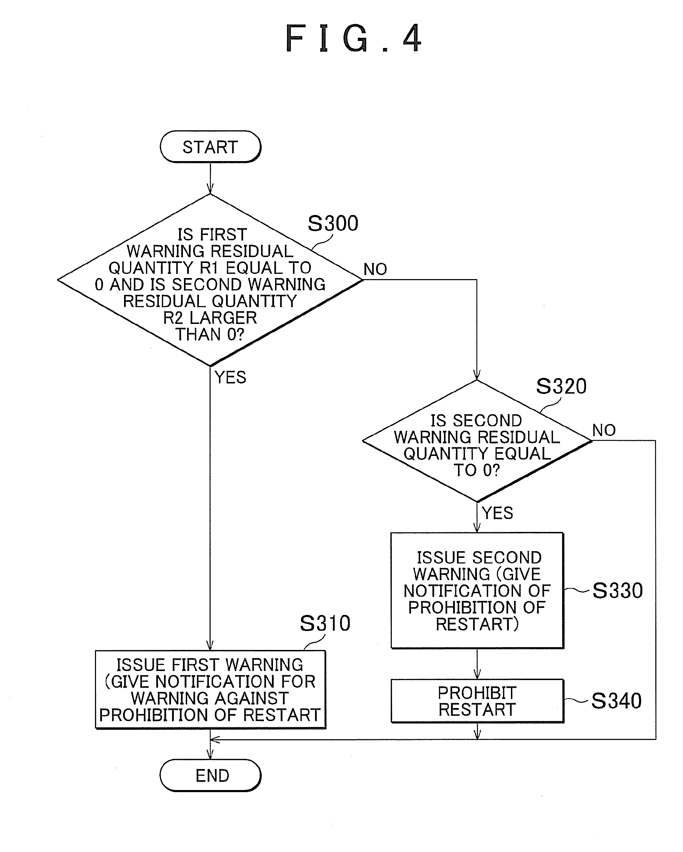

Next, a processing of giving a notification of the residual quantity of urea water and prohibiting the engine 1 from being restarted will be described with reference to FIG. 4. When the processing shown in FIG. 4 is started, it is determined whether or not a condition: "the first warning residual quantity R1 = 0" and "the second warning residual quantity R2 > 0" is satisfied as to the first warning residual quantity R1 and the second warning residual quantity R2 that have been calculated through the series of the processes shown previously in FIG. 3 (S300). Then, if the condition: "the first warning residual quantity R1 = 0" and "the second warning residual quantity R2 > 0" is satisfied (YES in S300), the current residual quantity NR of urea water is larger than the required addition quantity DA, but has decreased to the maximum required addition quantity DAM, so a first warning on the residual quantity of urea water is issued (S310), and the present processing is temporarily ended. This first warning is designed to warn that the current residual quantity of urea water has become small to such an extent that the engine 1 will be prohibited from being restarted in the near future if the operation of the engine 1 is continued without replenishing urea water, and a notification is given to warn against the prohibition of restart through sound, light, display on a meter panel or the like. Incidentally, this first warning is equivalent to the first notification.

On the other hand, if the condition: "the first warning residual quantity R1 = 0" and "the second warning residual quantity R2 > 0" is not satisfied (NO in S300), it is determined whether or not the condition: "the second warning residual quantity R2 = 0" is satisfied (S320). Then, if the condition: "the second warning residual quantity R2 = 0" is not satisfied (NO in S320), the present processing is temporarily ended.

On the other hand, if the condition: "the second warning residual quantity R2 = 0" is satisfied (YES in S320), the current residual quantity NR of urea water has decreased to the required addition quantity DA, so a second warning on the residual quantity of urea water is issued (S330). This second warning is designed to inform the driver of the vehicle and the like that the processing of prohibiting the engine 1 from being restarted is now executed because the residual quantity of urea water is insufficient, and a notification of the prohibition of restart of the engine 1 is given through sound, light, display on a meter panel or the like. Incidentally, this second warning is equivalent to the second notification. When this second warning is issued, the engine 1 is then prohibited from being restarted (S340), and the present processing is temporarily ended.

Incidentally, a required addition quantity of urea water that is required for purifying NOx is separately calculated. The warning processing as described above and the processing of prohibiting the engine 1 from being restarted are executed also when the residual quantity NR of urea water decreases to this calculated required addition quantity.

Next, the operation of the present embodiment of the invention will be described. The quantity of urea water that is required for cooling addition for maintaining the function of the urea addition valve 230 increases as the residual quantity FR of the fuel in the fuel tank increases, and as the distance that can be traveled by the vehicle lengthens. Thus, the required addition quantity DA as a quantity of urea water that is required for executing cooling addition and the maximum required addition quantity DAM are calculated based on the residual quantity FR of the fuel in the fuel tank. Then, in the case where the residual quantity NR of the urea water in the tank 210 decreases to the estimated required addition quantity DA or the maximum required addition quantity DAM, the first warning or the second warning is issued as a notification of the residual quantity of urea water. Therefore, when the residual quantity of the urea water in the tank 210 becomes smaller than the quantity of urea water that is required for executing cooling addition, the driver of the vehicle and the like are notified of the residual quantity of urea water, and can be urged to replenish urea water etc. Accordingly, an appropriate liquid quantity of urea water that is required for maintaining the function of the urea addition valve 230 is favorably ensured.

Besides, the maximum required addition quantity DAM as the required addition quantity corresponding to the residual quantity FR of the fuel in the fuel tank that is filled with engine fuel, and the required addition quantity corresponding to the current value of the residual quantity FR of fuel are estimated. Then, if the residual quantity NR of urea water decreases to the maximum required addition quantity DAM (YES in S300 of FIG. 4), the first warning on the residual quantity of urea water is issued (S310). Besides, if the residual quantity NR of urea water decreases to the required addition quantity DA (YES in S320 of FIG. 4), the second warning on the residual quantity of urea water is issued (S330).

The residual quantity FR of the fuel in the fuel tank that is filled with engine fuel, namely, the maximum required addition quantity DAM corresponding to the maximum storage quantity of the fuel tank is thus calculated, so the maximum of the residual quantity of urea water that is required for executing cooling addition is obtained. Then, when the residual quantity of the urea water in the tank 210 decreases to this maximum required addition quantity DAM, the first warning is issued. Accordingly, this first warning gives a tentative notification of the possibility of insufficiency in the quantity of urea water that is required for cooling addition.

Furthermore, the required addition quantity DA corresponding to the current value of the residual quantity FR of fuel is calculated, so the residual quantity of urea water that is required for executing cooling addition is more accurately obtained. Then, when the residual quantity of the urea water in the tank 210 decreases to this required addition quantity DA, the second warning is issued. Accordingly, this second warning gives a notification of a further increase in the possibility of insufficiency in the quantity of urea water that is required for cooling addition.

Besides, the vehicle is equipped with the filter 32 that collects the particulate matter in exhaust gas, as an exhaust gas control apparatus. The regeneration treatment for reducing the quantity of the particulate matter deposited on the filter 32 by raising the temperature of exhaust gas is executed. During the execution of this regeneration treatment, the temperature of the urea addition valve 230 becomes high, so the aforementioned cooling addition is likely to be executed. Thus, in step S250 and step S260 shown previously in FIG. 3, the number of times of execution of the regeneration treatment over the distance that can be traveled by the vehicle with the residual quantity FR of fuel is predicted, and the required addition quantity DA is calculated based on the predicted number of times of execution of the regeneration treatment. Accordingly, the quantity of urea water that is required for cooling the urea addition valve 230 is favorably calculated in accordance with the residual quantity FR of fuel.

As described above, the present embodiment of the invention makes it possible to obtain the following effects. (1) The required addition quantity DA as the quantity of urea water that is required for cooling addition of the urea addition valve 230 and the maximum required addition quantity DAM are calculated based on the residual quantity FR of the fuel in the fuel tank. Then, when the residual quantity NR of the urea water in the tank 210 decreases to the calculated required addition quantity DA or the maximum required addition quantity DAM, the first warning or the second warning is issued as a notification of the residual quantity of urea water. Therefore, the driver of the vehicle and the like are notified of the residual quantity of urea water that is required for cooling addition, and can be urged to replenish urea water etc. Accordingly, the liquid quantity of urea water that is required for maintaining the function of the urea addition valve 230 can be favorably ensured.

(2) The maximum required addition quantity DAM as the required addition quantity corresponding to the residual quantity FR of the fuel in the fuel tank that is filled with engine fuel, and the required addition quantity DA corresponding to the current value of the residual quantity FR of fuel are calculated. Then, the first warning on the residual quantity of urea water is issued when the residual quantity NR of urea water decreases to the maximum required addition quantity DAM, and the second warning on the residual quantity of urea water is issued when the residual quantity NR of urea water decreases to the required addition quantity DA. Accordingly, the first warning makes it possible to give a tentative notification of the possibility of insufficiency in the quantity of urea water that is required for cooling addition. Besides, the second warning makes it possible to give a notification of a further increase in the possibility of insufficiency in the quantity of urea water that is required for cooling addition.

(3) The number of times of execution of the regeneration treatment over the distance that can be traveled by the vehicle with the residual quantity FR of fuel is predicted, and the required addition quantity DA is calculated based on the predicted number of times of execution of the regeneration treatment. Accordingly, the quantity of urea water that is required for cooling the urea addition valve 230 can be favorably calculated in accordance with the residual quantity FR of fuel.

Incidentally, the aforementioned embodiment of the invention can also be carried out after being modified as follows. In step S300 shown in FIG. 4, it is determined that the current residual quantity NR of urea water has decreased to the maximum required addition quantity DAM, based on the state where the first warning residual quantity R1 is "0". It should be noted herein that when the first warning residual quantity R1 is "0", the current residual quantity NR of urea water and the maximum required addition quantity DAM are equal to each other. Thus, the calculation of the first warning residual quantity R1 is omitted, and the current residual quantity NR of urea water and the maximum required addition quantity DAM are compared with each other. Then, when the condition: "the current residual quantity NR of urea water = the maximum required addition quantity DAM" is satisfied, or when there is a shift from a state where the condition: "the current residual quantity NR of urea water > the maximum required addition quantity DAM" is satisfied to a state where the condition: "the current residual quantity NR of urea water < the maximum required addition quantity DAM" is satisfied, it may be determined that the current residual quantity NR of urea water has decreased to the maximum required addition quantity DAM.

By the same token, in step S320 shown in FIG. 4, it is determined that the current residual quantity NR of urea water has decreased to the required addition quantity DA, based on the state where the second warning residual quantity R2 is "0". However, when the second warning residual quantity R2 is "0", the current residual quantity NR of urea water and the required addition quantity DA are equal to each other. Thus, the calculation of the second warning residual quantity R2 is omitted, and the current residual quantity NR of urea water and the required addition quantity DA are compared with each other. Then, when the condition: "the current residual quantity NR of urea water = the required addition quantity DA" is satisfied or when there is a shift from a state where the condition: "the current residual quantity NR of urea water > the required addition quantity DA" is satisfied to a state where the condition: "the current residual quantity NR of urea water < the required addition quantity DA" is satisfied, it may be determined that the current residual quantity NR of urea water has decreased to the required addition quantity DA.

The required addition quantity DA is set based on the predicted number of times N of execution of the regeneration treatment of the filter 32. In addition, a quantity of heat received by the urea addition valve 230 during traveling of the vehicle may be estimated, and the required addition quantity DA may be set based on the estimated quantity of received heat.

Only the first warning residual quantity R1 or only the second warning residual quantity R2 may be calculated. The number of times of execution of the regeneration treatment of the filter 32 is predicted from the residual quantity FR of fuel, and the required addition quantity DA is calculated based on the predicted number of times of execution. It should be noted herein that as the residual quantity FR of fuel increases, the distance that can be traveled by the vehicle lengthens, and hence the number of times of execution of functional addition represented by cooling addition or the like tends to be increased. Thus, the required addition quantity DA may be directly set based on the residual quantity FR of fuel, such that the value of the required addition quantity DA increases as the residual quantity FR of fuel increases.

The aforementioned required addition quantity is a quantity of urea water that is required for executing cooling addition of the urea addition valve 230. However, the required addition quantity that is required for executing another type of addition, that is, functional addition may be obtained. For example, in the case where urea water is added on a predetermined cycle to suppress the clogging of the urea addition valve 230 as functional addition, a quantity of urea water that is required for executing the addition of urea water for suppressing the clogging may be calculated as the required addition quantity, based on the residual quantity of fuel, and a notification or the like of the residual quantity of urea water may be given in a manner similar to that of the aforementioned embodiment of the invention. Incidentally, in this modification example as well, as the residual quantity FR of fuel increases, the distance that can be traveled by the vehicle lengthens, and the number of times of execution of functional addition tends to be increased. Thus, the required addition quantity can be directly set based on the residual quantity FR of fuel, such that the required addition quantity as the quantity of urea water that is required for executing functional addition increases as the residual quantity FR of fuel increases.

The residual quantity of the urea water stored in the tank 210 is detected. However, the residual quantity of other addition liquids may be detected.

## Claims

1. A liquid quantity detecting system for an internal combustion engine (1), the liquid quantity detecting system comprising:
an addition valve (230) that is provided in an exhaust passage (26) of the internal combustion engine, the addition valve being configured to supply an addition liquid for exhaust gas purification;
an addition liquid tank (210) that stores the addition liquid; and
a control device (80) configured to
a) calculate a required addition quantity based on a residual quantity of fuel in a fuel tank that stores fuel for the internal combustion engine, the required addition quantity being a quantity of the addition liquid required for addition liquid injection control that is executed to maintain a function of the addition valve, and
b) give a notification of the residual quantity of the addition liquid when the residual quantity of the addition liquid in the addition liquid tank decreases to the required addition quantity.

2. The liquid quantity detecting system according to claim 1, wherein
the required addition quantity is a quantity of the addition liquid that is required for cooling the addition valve.

3. The liquid quantity detecting system according to claim 2, wherein
the exhaust passage of the internal combustion engine is provided with a filter (32) in which a regeneration treatment for reducing a quantity of collected particulate matter by raising a temperature of exhaust gas is executed, and
the control device is configured to predict the number of times of execution of the regeneration treatment over a distance that can be traveled by a vehicle with the residual quantity of fuel, and calculate the required addition quantity based on the predicted number of times of execution of the regeneration treatment.

4. The liquid quantity detecting system according to claim 1 or 2, wherein
the control device is configured to calculate the required addition quantity such that the required addition quantity increases as the residual quantity of fuel increases.

5. The liquid quantity detecting system according to claim 1 or 2, wherein
the control device is configured to
a) calculate a first required addition quantity as the required addition quantity corresponding to a residual quantity of fuel in the fuel tank that is filled with the fuel,
b) calculate a second required addition quantity as the required addition quantity corresponding to a current value of the residual quantity of fuel,
c) give a first notification of the residual quantity of the addition liquid when the residual quantity of the addition liquid decreases to the first required addition quantity, and
d) give a second notification of the residual quantity of the addition liquid when the residual quantity of the addition liquid decreases to the second required addition quantity.
